# EUROPEAN PATENT APPLICATION

(11) **EP 3 511 907 A1**
(43) Date of publication of application: **17.07.2019**
(21) Application number: 19151280.5
(22) Date of filing: 10.01.2019
(51) Int. Cl.: G06T 13/80

(54) **INTERACTIVE ANIMATED GIFS AND OTHER INTERACTIVE IMAGES**

(30) Priority: 10.01.2018 US 201815867442
(71) Applicant: Amojee, Inc., Saratoga, CA 95070 (US)
(72) Inventor: GEORGES, John B., Saratoga, CA 95070 (US); NILSTADIUS, Gustaf Jan Gunnar, Saratoga, CA 95070 (US); SHRESTHA, Ajay, Saratoga, CA 95070 (US)
(74) Representative: Dehns

(57) **Abstract**

Methods and systems for enabling a client device (102) to display interactive animated images are disclosed. A client device sends a query including a unique identifier to a server system (106). A response to the query includes first and second addresses specifying where respective first and second animated image files associated with the unique identifier are stored. The client device (102) downloads first and second image files using the first and second addresses. The client device (102) displays sequentially a first plurality of frames of the first animated image file downloaded using the first address. In response to detecting a user interacting with a user interface of the client device in a predetermined manner (e.g., tapping a screen) while the first plurality of frames are being displayed, the client device transitions to displaying a second plurality of frames of the second animated image file downloaded using the second address.

## Description

### BACKGROUND

People love to connect and share their feelings and emotions with one another. Prior to email and text messaging, people often wrote and mailed letters written on stationary to one another. As computers and mobile phones became more prolific, people began writing and sending emails and text messages to one another that primarily included text, i.e., written words.

People have long recognized the advantages of sharing images or pictures with one another, since as the expression goes, a picture is worth a thousand words. Initially, when people wanted to include images with their electronic messages, they typically needed to include images as attachments to emails.

In 1987, the Graphics Interchange Format (better known by its acronym GIF) was developed, and it has since come into widespread usage, and is often used as an efficient way for people to express feelings and emotions. While the acronym GIF refers to an image encoding format (i.e., Graphics Interchange Format, as noted above), the term GIF is often also used to refer to the displayed images themselves. For example, people often say that they viewed or watched a GIF, created a GIF, sent or posted a GIF, and the like. There exist both static GIFs and animated GIFs. A static GIF is a single frame GIF that when viewed is a still image. An animated GIF includes a plurality of frames in a single animated image file and is described by its own graphic control extension. The frames of an animated GIF are presented in a specific order, i.e., a sequence, in order to convey animation or movement. By default, animated GIFs display the sequence of frames only once, stopping when the last frame is displayed, although it can also loop endlessly or stop after a few sequences.

The terms animated GIF and animated image, as used herein, refers to a moving image, as opposed to a static image, wherein the moving image includes a plurality of frames that when displayed sequentially provide for an illusion of motion. The terms animated GIF and animated image, as used herein, should not be interpreted as requiring that the frames of the animated image are drawn (e.g., as in a cartoon). Rather, as the terms animated GIF and animated image are used herein, the frames thereof may be captured using a camera, or alternatively can be drawn.

The GIF format supports up to 8 bits per pixel for each image, allowing a single image to reference its own palette of up to 256 different colors chosen from the 24-bit RGB color space. The GIF format also supports animations and allows a separate palette of up to 256 colors for each frame. GIF images are compressed using the Lempel-Ziv-Welch (LZW) lossless data compression technique to reduce the file size without degrading the visual quality. A GIF file describes a fixed-sized graphical area (the "logical screen") populated with one or more "images". GIF files can describe a single image that fills the entire logical screen, or can divide the logical screen into separate sub-images. The GIF file format is supported by nearly all Web browsers and operating systems, including Apple's iOS, Google's Android, and Microsoft's Windows, just to name a few. This has led to the widespread use and popularity of GIFs. Various image editing programs, such as Adobe Photoshop, GNU Image Manipulation Program (GIMP), and Microsoft GIF Animator, can be used to create simple animated GIFs.

Animated GIFs are formatted in accordance with the GIF format. While an animated GIF is one example of an animated image, animated images that people may create and share with one another may be formatted using alternative image formats. In other words, there exist numerous other image formats besides the GIF format that can be used to share animated images. Exemplary other image formats that can support and be used to share animated images include, but are not limited to, Animated Portable Network Graphics (APNG), Multiple-image Network Graphics (MNG), WebP, or FLIC format, just to name a few. As with animated GIFs, these other animated image formats can be used to display a plurality of frames sequentially to provide for an illusion of motion. Additionally, as with animated GIFs, an animated image file formatted in accordance with these alternative animated image formats can specify that frames of the animated image file be displayed sequentially only once, stopping when the last image or frame is displayed, or can specify that the sequentially displayed frames loop endlessly or stop after a few sequences.

### SUMMARY

Certain embodiments of the present technology enhance or improve the displaying of animated GIFs and other format types of animated image files by making them interactive. More generally, methods and systems described herein enable a client device to display interactive animated images. In accordance with certain embodiments, a server system stores one or more tables that associate each unique identifier, of a plurality of unique identifiers, with respective first and second addresses that specify where respective first and second animated image files associated with the unique identifier are stored. Each of the first and second animated image files associated with one of the unique identifiers includes respective image data for a respective plurality of frames that when displayed sequentially provide for an illusion of motion. In accordance with certain embodiments, a client device can send a query including a unique identifier to a server system that stores the one or more tables mentioned above. In response to receiving the query, the server system uses the table(s) to identify respective first and second addresses that specify where respective first and second animated image files associated with the unique identifier included in the query are stored.

The server system then sends a response to the query to the client device, wherein the response to the query includes the identified first and second addresses. The identified first address that is sent to the client device enables the client device to download a first animated image file that includes image data for a first plurality of frames to be displayed sequentially, via a display of the client device. The identified second address that is sent to the client device enables the client device to download a second animated image file that includes image data for a second plurality of frames to be displayed sequentially, via the display of the client device, in response to a user of the client device interacting with a user interface of the client device in a predetermined manner while the first plurality of frames corresponding to the first animated image file are being displayed sequentially via the display of the client device. For an example, a first animated image file may include frames that show a person or animal walking, and the second animated image file may include frames that show the person or animal jumping. Using embodiments of the present technology, if a user taps a touch screen of their client device (or interacts with a user interface of the client device on some other predetermined manner) while viewing the person or animal walking, the client device will transition to displaying the person or animal jumping. This will provide the user with the illusion that they caused the person or animal to jump. Accordingly, such embodiments enable a user of a client device to interact with animated images that the user is viewing on the client device. In contrast, conventionally when an animated GIF or other animated image file is displayed, they are not interactive.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a high level block diagram of an exemplary client-server environment in which embodiments of the present technology may be implemented.
FIG. 2 is high level a block diagram illustrating exemplary details of a client device, included in the exemplary client-server environment introduced in FIG. 1.
FIG. 3 is high level a block diagram illustrating exemplary details of a server system, included in the exemplary client-server environment introduced in FIG. 1.
FIG. 4 illustrates an example of an interactive animated image, in accordance with an implementation of the present technology.
FIG. 5 is a high level flow diagram that is used to summarize and explain methods according to various embodiments of the present technology.
FIG. 6 shows an exemplary way in which a list of interactive animated images can be presented to a user of a client device to enable the user to select one of the interactive animated images, and that enables the user to share one of the interactive animated images with another user.
FIG. 7 and 8 show an example of how a client device can transition from displaying frames associated with a first animated image file of an interactive animated image, to displaying frames associated with a second animated image file of the interactive animated image, in response to a user of the client device interacting with the client device in a predetermined manner.
FIG. 9 illustrates how a link to a specific interactive animated image that a first user wants to share with a second user can appear as a URL or other address in a message thread displayed on a display of the second user's client device.

### DETAILED DESCRIPTION

Conventionally, when an animated GIF or other animated image file is displayed, they are not interactive. Rather, as explained above, a sequence of frames will be displayed once to provide for an illusion of motion, or the sequence of frames will be displayed in an endless loop, or the sequence of frames will loop or repeat a number of times as specified by the animated image file and then stop. Certain embodiments of the present technology enhance or improve the displaying of animated GIFs (and other format types of animated image files) by making them interactive. More specifically, in accordance with certain embodiments of the present invention, two separate (e.g., first and second) animated image files are associated with one another such that while frames of a first animated image file are being displayed sequentially to a user of a client device to provide for a first illusion of motion, in response to a user of the client device interacting with a user interface of the client device in a predetermined manner (e.g., tapping a touch screen of the client device) the client device with transition to sequentially displaying frames of the second animated image file to provide for a second illusion of motion.

Preferably, although not necessarily, the animated image corresponding to the second animated image file relates in some manner to the animated image corresponding to the first animated image file, so that collectively an interactive animated image (e.g., an interactive GIF) is provided. For an example, a first animated image file may include frames that show a person or animal walking, and the second animated image file may include frames that show the person or animal jumping. Using embodiments of the present technology, if a user taps a touch screen of their client device (or interacts with a user interface of the client device on some other predetermined manner) while viewing the person or animal walking, the client device will transition to displaying the person or animal jumping. This will provide the user with the illusion that they caused the person or animal to jump.

For another example, a first animated image file may include frames that show a person jumping off a diving board and doing a belly flop, and the second animated image file may include frames that shows a judge or other person holding a score card over their head with the number 0 (i.e., zero) written on it. For still another example, a first animated image file may include frames that show a car driving down a road, and the second animated image file may include frames that shows a car exploding. For a further example, a first animated image file may include frames that show a child doing something extraordinary, and and the second animated image file may include frames that show a speech bubble with the word "WOW" coming out of an adult's mouth. These are just a few examples, which are not intended to be all encompassing.

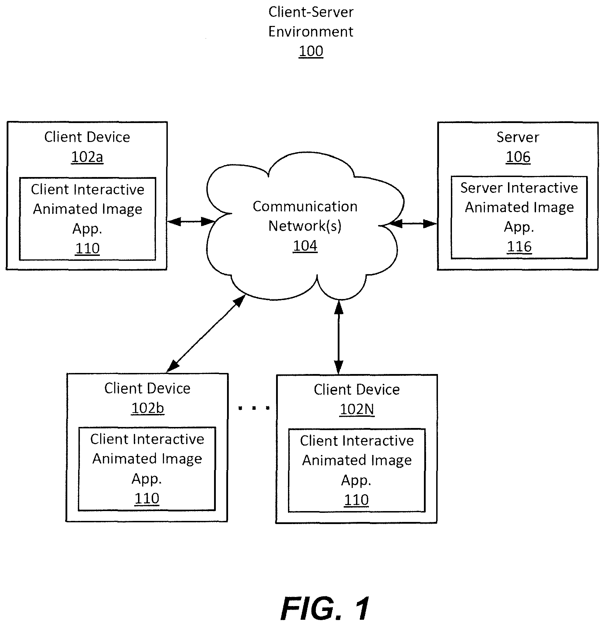

Before providing additional details of embodiments of the present technology, an exemplary client-server environment that can be used to implement embodiments of the present technology is described with reference to FIG. 1.

### Client-Server Environment

Referring initially to FIG. 1, illustrated therein is an exemplary client-server environment 100 that includes multiple client devices 102a, 102b ... 102N and a server system 106. The client devices 102a, 102b ... 102N can be referred to individually as a client device 102, or collectively as client devices 102. The client devices 102 and server system 106 are communicatively coupled by one or more communication networks 104.

The server system 106 operates an interactive animated image service that facilitates the viewing of and interaction with interactive animated images (e.g., interactive GIFs) by users of the client devices 102. The client-server environment 100 can also be referred to more generally as a system 100. As will be described in additional detail below, in some implementations the server system 106 stores one or more tables that associate each unique identifier, of a plurality of unique identifiers, with respective first and second addresses that specify where respective first and second animated image files associated with the unique identifier are stored. As will be described in additional detail below, each of the first and second animated image files associated with one of the unique identifiers includes respective image data for a respective plurality of frames that when displayed sequentially provide for an illusion of motion.

The communication network(s) 104 can be any wired or wireless local area network (LAN) and/or wide area network (WAN), such as an intranet, an extranet, or the Internet. It is sufficient that the communication network 104 provides communication capability between the client devices 102, the server system 106, and optional other devices and systems. In some implementations, the communication network(s) 104 uses the HyperText Transport Protocol (HTTP) to transport information using the Transmission Control Protocol/Internet Protocol (TCP/IP). HTTP permits client devices 102 to access various resources available via the communication network(s) 104. The various implementations described herein, however, are not limited to the use of any particular protocol.

The client-server environment 100 includes multiple client devices 102. A respective client device 102 is any suitable computing device that, in some implementations, is capable of connecting to the communication network(s) 104, receiving from the server system 106 messages originating from other client devices 102, sending to the server system 106 messages intended for other client devices 102, and presenting, managing, and inputting/editing messages. In some implementations, the client device 102 is a smartphone, a mobile phone, a tablet device, a computing device of a vehicle of a user (e.g., an in-vehicle communications system, an in-vehicle entertainment system, an in-vehicle navigation system), a wearable apparatus of the user that includes a computing device (e.g., a watch of the user having a computing device, glasses of the user having a computing device, a wearable music player), a desktop computer, a laptop computer, a netbook computer, a gaming device, a multimedia player device, or any other device that is capable of sending and receiving messages, as well as presenting (e.g., displaying), managing, and inputting/editing messages. In some implementations, the client device 102 includes an image capture device (e.g., a camera). In most of the examples shown and discussed herein, the client device 102 is shown as and described as a smartphone. However, other types of client devices 102 can be used to implement embodiments of the present technology described herein.

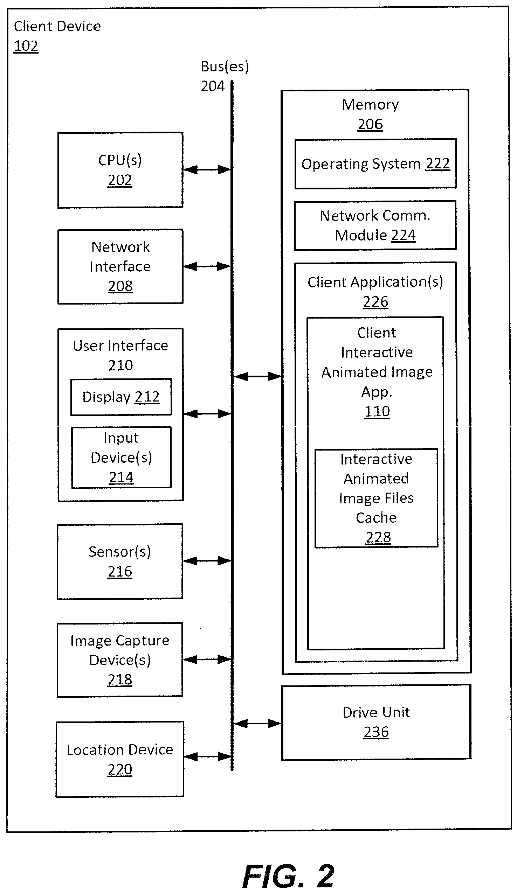

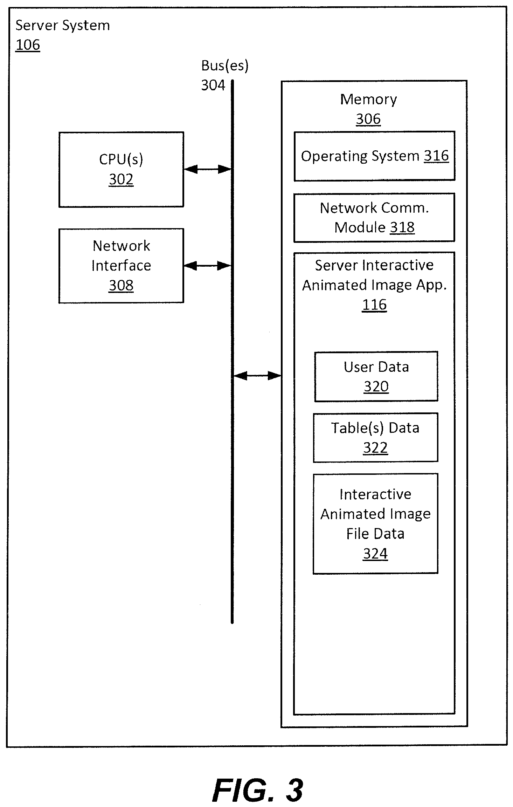

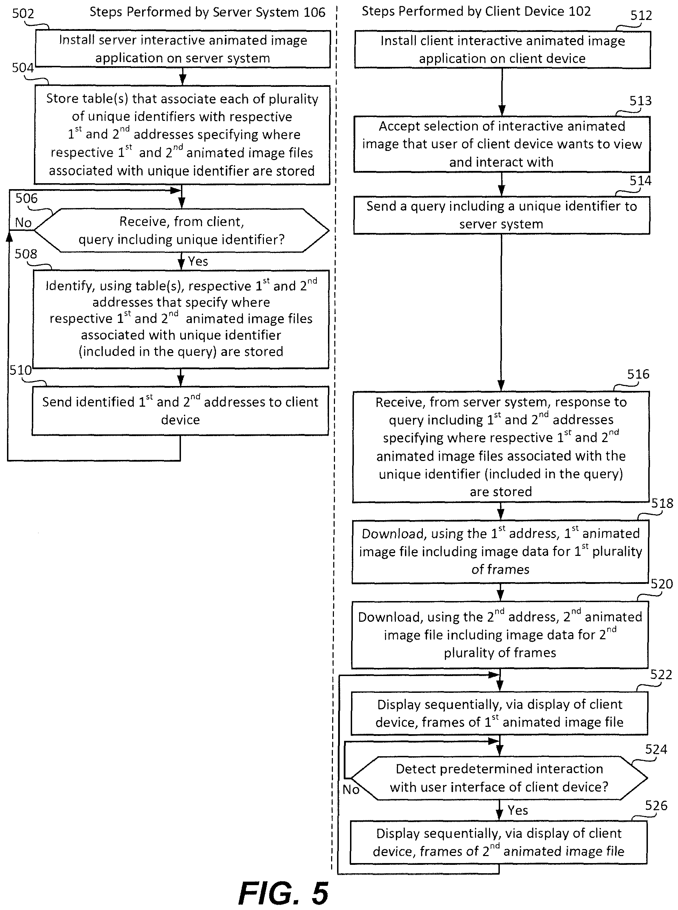

In some implementations, the client device 102 includes a client interactive animated image application 110, which is operable to implement specific embodiments of the present technology. More specifically, the client interactive animated image application 110 enables a user of a client device to view and interact with an interactive animated image. The client interactive animated image application 110 can also enable a user of the client device to produce their own interactive animated images, and to share those with other users of other client devices. The client interactive animated image application 110 can be downloaded to a client device 102 from an application store, which is also known as an "app store" or an "app marketplace". It is also possible that the client interactive animated image application 110 can be downloaded to a client device 102 in response to the user of the client device 102 registering with the server 106 via a registration webpage served by the server 106. Other variations are also possible, and within the scope of the embodiments described herein. Additional details of the client device 102, and the client interactive animated image application 110, are described below, e.g., with reference to FIGS. 2 and 5-8. Additional details of the server system 106, and the server interactive animated image application 116, are described below, e.g., with reference to FIGS. 3 and 5.

The server system 106 is described herein as a single server computer for sake of convenience and ease of understanding. It should be appreciated, however, that the server system 106 may be implemented as a single server computer or as multiple server computers (e.g., in a distributed server system). More generally, the server system 106 can include one or more processors and one or more data stores that are used to support an interactive animated image service according to an embodiment of the present technology. When a client device 102 communicates with the server system 106, the server system 106 may be referred to as a remote server, since the server system 106 is remotely located relative to the client device 102. Similarly, a data store associated with the server system 106 may be referred to as a remote data store, since the data store is remote relative to the client device.

### Client Device

FIG. 2 is a block diagram illustrating exemplary details of a client device 102 in accordance with some implementations. Referring to FIG. 2, the client device 102 is shown as including one or more processors (e.g., CPUs) 202, one or more network or other communications interfaces 208, a user interface 210, a memory 206, a drive unit 236, and one or more communication buses 204 for interconnecting these and other components. The communication buses 204 optionally include circuitry (sometimes called a chipset) that interconnects and controls communications between system components. The user interface 210 includes a display device 212 and one or more input devices 214.

In some implementations, the display device 212 is integrated with the device (e.g., housed in the same chassis as the CPU and memory, such as with a smartphone or a tablet computer). In some other implementations, the display device 212 is separate from other components of the client device 102 (e.g., a separate device from the device that houses the CPUs 202 and memory 206, such as with a desktop computer with a "tower" chassis housing the CPU and memory and a separate display device). Where the client device 102 is a mobile device, such as a smart phone, tablet computer, smart watch, or the like, the display device 212 is most likely integrated with the device.

In some implementations, the input device(s) 214 include one or more of: a mouse or similar pointing device, a keyboard, a touch-sensitive surface (e.g., a touch pad, a touch-sensitive display), a joystick, and one or more buttons. In some implementations, the display device 212 is a touch screen (i.e., a touch-sensitive display) that may display a virtual keyboard. The display device 212 can also be referred to more succinctly herein as a display 212 of a client device 102, or simply as a display 212.

In some implementations, the client device 102 includes additional input devices, such as an audio input device (e.g., a microphone). In some implementations, the client device 102 includes an audio output device (e.g., a speaker, headphones). The client device 102 can also be referred to more succinctly herein as a client 102.

In some implementations, the client device 102 also includes one or more sensors 216 (e.g., accelerometer, magnetometer, proximity sensor, gyroscope), an image capture device 218 (e.g., a camera device or module and related components), and a location device 220 (e.g., a Global Positioning System (GPS) receiver or other navigation or geolocation device and related components). In some implementations, the location device 220 determines the location of the client device 102 (e.g., using GPS or other similar systems, location identification by IP address, etc.).

The memory 206 can be used to store software and/or firmware that controls the client device 102, as well to store machine readable executable code for the client interactive animated image application 110. Further, the memory 206 can also store sensor data obtained using one or more sensors 216, image data captured using the image capture device 218, but is not limited thereto. Various different types of memory, including non-volatile and volatile memory can be included in the mobile computing device 102. For example, the memory 206 can include high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The memory 206 may optionally include one or more storage devices remotely located from the CPU(s) 202. The memory 206, or alternatively the non-volatile memory device(s) within memory 206, comprises a non-transitory computer readable storage medium. In some implementations, the memory 206 or the computer readable storage medium of memory 206 store the following programs, modules and data structures, or a subset thereof, including: an operating system 222, network communication module 224, and one or more client applications 226.

A drive unit 236, e.g., a hard drive, but not limited thereto, can also be used to store software that controls the client device 102, as well to store images captured using the image capture device 218, but is not limited thereto. The memory 206 and the drive unit 236 can include a machine readable medium on which is stored one or more sets of executable instructions (e.g., apps) embodying one or more of the methodologies and/or functions described herein. In place of the drive unit 236, or in addition to the drive unit, the client device 102 can include a solid-state storage device, such as those comprising flash memory or any form of non-volatile memory. The terms "machine-readable medium" and "processor readable storage device" as used herein should be taken to include all forms of storage media, either as a single medium or multiple media, in all forms; e.g., a centralized or distributed database and/or associated caches and servers; one or more storage devices, such as storage drives (including e.g., magnetic and optical drives and storage mechanisms), and one or more instances of memory devices or modules (whether main memory, cache storage either internal or external to a processor, or buffers. The term "machine-readable medium," "computer-readable medium," and "processor readable storage device" shall be taken to include any tangible non-transitory medium which is capable of storing or encoding a sequence of instructions for execution by the machine and that cause the machine to perform any one of the methodologies. The term "non-transitory medium" expressly includes all forms of storage drives (optical, magnetic, etc.) and all forms of memory devices (e.g., DRAM, Flash (of all storage designs), SRAM, MRAM, phase change, etc., as well as all other structures designed to store information of any type for later retrieval.

The memory 206, the disk unit 236 and/or other types of storage media of the client device 102 can be referred more generally herein as a data store. Further, because such storage media is part of the client device, such storage media will often be referred to as a local data store, so as to distinguish it from a remote data store associated with the remote server 106 and/or other data store.

The operating system 222 includes procedures for handling various basic system services and for performing hardware dependent tasks, as well as obtaining readings from sensors 216.

The network communication module 224 facilitates communication with other devices and computers (e.g., other client devices 102, server system 106) via the one or more communication network interfaces 208 (wired or wireless) and one or more communication networks 104, such as the Internet, other wide area networks, local area networks, metropolitan area networks, and so on.

The client application(s) 226 perform various operations. In some implementations, the client applications 226 include the client interactive animated image application 110. The client interactive animated image application 110 is configured to enable a client to select and interact with an animated interactive image that a user of the client device 102 wants to view. The client interactive animated image application 110 can also be configured to enable a user of the client device 102 to create their own animated interactive images, as well as to send animated interactive images to other users of other client devices 102.

The client device 102 can store locally within its memory 206 unique identifiers and addresses at which animated image files associated with the unique identifiers are remotely stored relative to the client device 102, after the client device 102 has obtained the unique identifiers and addresses from the server system 106 or from another client 102. In certain embodiments the client device 102 can store locally within the memory 206 animated image files associated with unique identifiers, after the client device 102 has obtained the animated image files from a remote data store. This would enable a user of the client device 102 to view and interact with interactive animated images more quickly (compared to if the animated image files need to be downloaded from a remote data store), and maximizes the speed at which an interactive animated image is responsive to a user's interaction with the client device 102. The portion of the memory 206 in which animated image files are stored, which are for use with the client interactive animated image application 110, can be referred to as the interactive animated image files cache 228.

Each of the above identified elements may be stored in one or more of the previously mentioned memory devices, and each of the modules or programs corresponds to a set of instructions for performing a function described above. The set of instructions can be executed by one or more processors (e.g., the CPUs 202). The above identified modules or programs (i.e., sets of instructions) need not be implemented as separate software programs, procedures or modules, and thus various subsets of these modules may be combined or otherwise rearranged in various implementations. In some implementations, the memory 206 may store a subset of the modules and data structures identified above. Furthermore, the memory 206 may store additional modules and data structures not described above.

Although FIG. 2 shows a client device, FIG. 2 is intended more as functional description of the various features which may be present in a client device than as a structural schematic of the implementations described herein. In practice, and as recognized by those of ordinary skill in the art, items shown separately could be combined and some items could be separated.

### Server System

FIG. 3 is a block diagram illustrating a server system 106, in accordance with some implementations. The server system 106 typically includes one or more processors (e.g., CPU's) 302, one or more network or other communications interfaces 308, memory 306, and one or more communication buses 304 for interconnecting these components. The communication buses 304 optionally include circuitry (sometimes called a chipset) that interconnects and controls communications between system components. The memory 306 can include high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. In some embodiments, memory 306 includes one or more storage devices remotely located from the CPU(s) 302. The memory 306, including the non-volatile and volatile memory device(s) within the memory 306, comprises a non-transitory computer readable storage medium. In some implementations, the memory 306 or the non-transitory computer readable storage medium of memory 306 stores the following programs, modules and data structures, or a subset thereof, including an operating system 316, a network communication module 318, the server interactive animated image application 116, user data 320, table(s) data 322, and animated image file data 324. The memory 306 can also be used to store and otherwise support one or more databases that are used to store addresses and/or animated image files that are used to implement embodiments of the present technology. For example, the table(s) data 322 can store one or more tables that associate each unique identifier, of a plurality of unique identifiers, with respective first and second addresses that specify where respective first and second animated image files associated with the unique identifier are stored, wherein each of the first and second animated image files associated with one of the unique identifiers includes respective image data for a respective plurality of frames that when displayed sequentially provide for an illusion of motion.

The memory 306, and/or other types of storage media of the server system 106 can be referred more generally herein as a data store. Further, because such storage media is associated with the remote server 106, such storage media will often be referred to as a remote data store, so as to distinguish it from a local data store associated with the client device 102.

The operating system 316 includes procedures for handling various basic system services and for performing hardware dependent tasks.

The network communication module 318 facilitates communication with other devices and computers (e.g., client devices 102) via the one or more communication network interfaces 308 (wired or wireless) and one or more communication networks 104, such as the Internet, other wide area networks, local area networks, metropolitan area networks, and so on.

The server interactive animated image application 116 receives and responds to queries from client devices 102 (which queries can also be referred to as server calls). The server interactive animated image application 116 can also store and update one or more of the table(s) 324 that is/are used to support use of the client interactive animated image application 110 by client devices 102. Such one or more tables 324 can be stored in the memory 306, portions of which can be co-located with the CPU(s) 302 and/or portions of which can be located remotely from the CPU(s) 302. The server interactive animated image application 116 can also enable client devices 102 to upload animated image files, and can associate two (or potentially more) uploaded animated image files with a common unique identifier and with addresses where the animated image files are stored. The animated image file data 324 can be stored locally relative to the CPU(s) 302, e.g., in one or more data stores controlled by the server system 116. Alternatively, or additionally, animated image file data 324 can be stored remotely relative to the CPU(s) 302, e.g., in one or more data stores that is/are not controlled by the server system 116.

User data 320 is the data associated with the users of the interactive animated image application. User data 320 can include user account and profile information (e.g., username, user client device ID, user ID, password, etc.) and, for each user, information about interactive animated images (e.g., the unique identifiers thereof) that a user has downloaded, and information about interactive animated images (e.g., the unique identifiers thereof) that a user has produced and/or uploaded, but is not limited thereto.

In accordance with certain embodiments of the present technology, a same table can store a plurality of unique identifiers, with respective first and second addresses that specify where respective first and second animated image files associated with a unique identifier are stored. As will be described in more detail below, each of the first and second animated image files associated with one of the unique identifiers includes respective image data for a respective plurality of frames that when displayed sequentially provide for an illusion of motion. The Table 1 shown below is an example of a table that associates each unique identifier, of a plurality of unique identifiers, with respective first and second addresses that specify where respective first and second animated image files associated with the unique identifier are stored.

**Table 1**

| Unique ID | Name | 1^{st} address | 2^{nd} address | Other Data |
|---|---|---|---|---|
| 1 | Walk-jump | www.fooo.foo/image11.gif | www.fooo.foo/image12.gif | |
| 2 | Flop-score | www.fooo.foo/image21.gif | www.fooo.foo/image21.gif | |
| 3 | Drive-explode | //ABE6AC== | //FGH6AC== | |
| 4 | Child-wow | //JKL7AB== | www.fooo.foo/image42.gif | |
| 5 | Name5 | www.fooo.foo/image51.gif | //MNL8HK== | |
| ... | ... | ... | ... | |

Each row in Table 1 corresponds to a different interactive animated image that users of client devices 102 can view on a display 212 thereof. The first (i.e., left most) column of Table 1 includes unique identifiers (Unique IDs) for each of a plurality of interactive animated images. The second column includes names of interactive animated images, with each name corresponding to the unique identifier included in the same row of Table 1. Each such name can be specified by the person that created or curated the specific interactive animated image, which can be a person employed by the company that hosts the server interactive animated image application 116, or can be a user of a client device 102 that has downloaded the client interactive animated image application 110, but is not limited thereto. The third and fourth columns of Table 1 include, respectively, first and second addresses that specify where respective first and second animated image files, associated with the unique identifier within the same row as the addresses, are stored. The last (i.e., right most) column of Table 1 is labeled as other data. The other data column can store, e.g., a date when the information included a row was initially uploaded, a date when when the information included a row was last updated, an indication of popularity of an interactive animated image, and/or the like. Where there are multiple types of other data to be included in the table, additional columns could be added to store such other day, such that each type of other data is included in a separate column. Another type of data that can be stored in an additional column are tag words associated with the interactive animated images, which tag words can be used by users of client device to search for, find and select specific interactive animated images. A further column (not shown) in Table 1, or a similar table, can include a unique link (e.g., a URL or other address) that enables a user of a second client device to access an interactive animated image that a user of a first client device indicated they want to share with the user of the second client device, as will be described in further detail below. In other words, a unique link can be associated with each row in the Table 1. Such a unique link is another example of a type of unique identifier having respective first and second addresses that specify where respective first and second animated image files associated with the unique identifier are stored.

Table 1, and/or similar table(s), can be stored in a data store of or accessible by the server system 106. Alternatively, or additionally, such a table, or portions thereof, can be stored in a local data store of a client device 102. Alternative tables and/or multiple tables can be used instead of Table 1 to store similar information to that stored by Table 1.

Each of the above identified elements (e.g., tables) may be stored in one or more of the previously mentioned memory devices, and each of the modules or programs corresponds to a set of instructions for performing a function described above. In some embodiments, the set of instructions is executed by one or more processors (e.g., the CPUs 302). The above identified modules or programs need not be implemented as separate software programs, procedures or modules, and thus, in some implementations, various subsets of these modules is combined or otherwise rearranged. In some implementations, memory 306 stores a subset of the modules and data structures identified above. Furthermore, in some embodiments, memory 306 stores additional modules and data structures not described above.

Although FIG. 3 shows a server system, FIG. 3 is intended more as functional description of the various features which may be present in a set of servers than as a structural schematic of the implementations described herein. In practice, and as recognized by those of ordinary skill in the art, items shown separately could be combined and some items could be separated. For example, some items (e.g., operating system 316 and network communication module 318) shown separately in FIG. 3 could be implemented on single servers and single items could be implemented by one or more servers. The actual number of servers used to implement the server system 106 and how features are allocated among them will vary from one implementation to another, and, in some instances, depends in part on the amount of data traffic that the system must handle during peak usage periods as well as during average usage periods.

### Interactive Animated Images

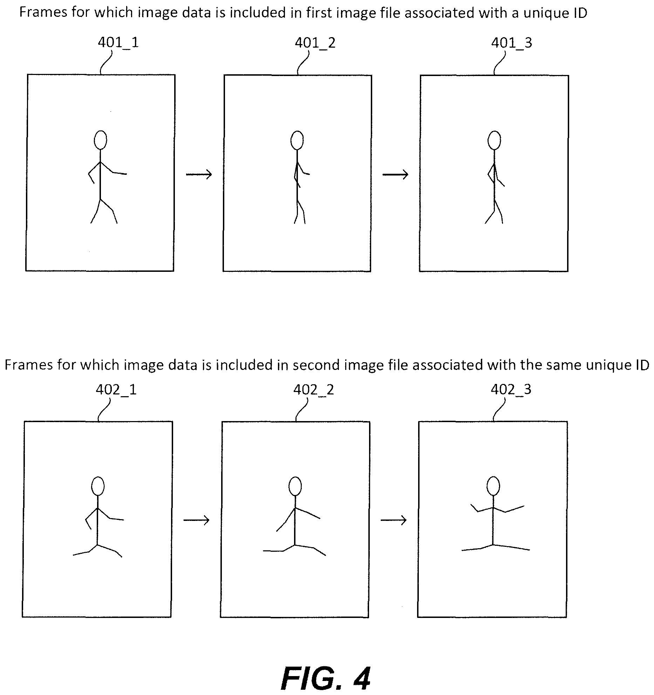

FIG. 4 illustrates three frames 401_1, 401_2, and 401_3 of an exemplary first animated image file associated with a unique identifier, and three frames 402_1, 402_2, and 402_3 of an exemplary second animated image file associated with the same unique identifier, which is assumed to be the unique ID "1" in the Table 1 shown above (and/or a unique link associated with the first row in the Table 1). The frames 401_1, 401_2, and 401_3 of the first animated image file associated with the unique ID "1" when sequentially displayed show (or more specifically, provide for an illusion of) a person walking. The frames 402_1, 402_2, and 402_3 of the second animated image file associated with the same unique ID "1" when sequentially displayed show (or more specifically, provide for an illusion of) a person jumping. In an actual implementation, each of the first and second animated image files would likely include many more then three frames. For example, each of the first and second animated image files may include anywhere from about 10 frames to about 30 frames, but are not limited thereto. In accordance with certain embodiments of the present technology, each of the first and second animated image files is an animated GIF file. In alternative embodiments, one or both of the first and second animated image files can have alternative animated image file formats, such as, but not limited to, Animated Portable Network Graphics (APNG), Multiple-image Network Graphics (MNG), WebP, or FLIC format, just to name a few. Both the first and second animated image files that are associated with the same unique identifier (the unique ID "1" in this example, or equivalently a unique link associated with the first row in the Table 1) can have the same animated image file formats as one another, or they can have animated image file formats that differ from one another.

In accordance with certain embodiments of the present technology, a client device 102, in response to a user of the client device indicating that they want to download a specific interactive animated image, sends a query that includes a unique identifier (e.g., the unique ID "1", or equivalently a unique link associated with the first row in the Table 1) to the server system 106. In response to receiving the query including the unique identifier, the server system identifies (e.g., using the Table 1, or one or more alternative tables) first and second addresses that specify where respective first and second animated image files associated with the unique identifier included in the query are stored. For example, referring to the exemplary Table 1 shown above, if the query includes the unique ID "1", then the server system 106 can use the Table 1 to identify the first address www.fooo.foo/image11.gif that specifies where the first animated image file associated with the unique ID "1" is stored, and the server system can use the Table 1 to identify the second address www.fooo.foo/image12.gif that specifies where the second animated image file associated with the unique ID "1" is stored. The server system 106 can then send to the client device 102 (from which the server system 106 received the query) the identified first and second addresses (www.fooo.foo/image11.gif and www.fooo.foo/image12.gif). In other words, the response to the query will include the first and second addresses (www.fooo.foo/image11.gif and www.fooo.foo/image12.gif) that specify where respective first and second animated image files associated with the unique identifier included in the query are stored. In this example, the first and second addresses are both uniform resource locators (URLs) that specify, respectively, where the first and second animated image files associated with the unique ID "1" are stored.

In certain embodiments, the first and second URLs that the server system 106 provides to a client device 102 (in response to a query from the client device 102) can specify where first and second animated image files are stored remotely from the data store (e.g., 306) where the table(s) (e.g., Table 1) used by the server system 106 are stored. For example, the Table 1 (or one or more similar tables) can be stored in a data store (e.g., the memory 306) associated with the server system 106, and the first and second animated image files associated with the unique identifier (e.g., unique ID "1") can be stored remotely from the server system 106. It is also noted that the first and second animated image files associated with a unique identifier (e.g., unique ID "1") can be stored in different data stores than one another, or in the same data store.

After the response to a query is sent from the server system 106 to the client device 102 (e.g., the client device 102a) from which the query was received, the client device 102 initially uses the first address to download the first animated image file (e.g., which includes image data for the frames 401_1, 401_2, and 401_3 shown in FIG. 4) from the first address (e.g., www.fooo.foo/image11.gif) included in the response. Once the first animated image file is downloaded to the client device 102, the client device 102 begins to display the first animated image file, and more specifically, displays the frames 401_1, 401_2, and 401_3 sequentially, via a display (e.g., 212) of the client device 102.

In accordance with certain embodiments, while the client device 102 is displaying the frames (e.g., 401_1, 401_2, and 401_3) corresponding to the first animated image file sequentially in a loop, the client device 102 uses the second address (e.g., www.fooo.foo/image12.gif) to download the second animated image file (e.g., which includes image data for the frames 402_1, 402_2, and 402_3 shown in FIG. 4) from the second address (e.g., www.fooo.foo/image12.gif) included in the response.

The frames (e.g., 401_1, 401_2, and 401_3) corresponding to the first animated image file can continue to be displayed sequentially in a loop until a user of the client device 102 interacts with a user interface of the client device 102 in a predetermined manner. Then, in response to which the client device 102 detecting that the user of the client device 102 interacted with a user interface of the client device 102 in the predetermined manner (e.g., touched a touch screen of the client device 102), the client device 102 will transition to displaying the frames (e.g., 402_1, 402_2, and 402_3) corresponding to the second animated image file. For example, referring to FIG. 4, the frames 401_1, 401_2, and 401_3 corresponding to the first animated image file can be displayed sequentially in a loop to provide for the illusion of a person walking. Then, in response to the client device 102 detecting that a user tapped the touch screen of the client device, the client device 102 will transition to displaying the frames 402_1, 402_2, and 402_3 (corresponding to the second animated image file) to provide for the illusion of a person jumping. In this example, it will appear to the user that they caused the person to change from walking to jumping.

In accordance with certain embodiments, after the last frame (e.g., 402_3) corresponding to the second animated image file is displayed, the client device transitions back to displaying the frames (e.g., 401_1, 401_2, and 401_3) corresponding to the first animated image file sequentially in a loop. Thereafter, if the user again interacts with the user interface of the client device 102 in the predetermined manner (e.g., touches the touch screen of the client device 102 again), the client device 102 will transition again to displaying the frames (e.g., 402_1, 402_2, and 402_3) corresponding to the second animated image file. In this manner, the user of the client device 102 can interact with the interactive animated image. If the user wants to stop viewing an interactive animated image, the user can select a specific button, an X icon, or the like, depending upon implementation. Alternatively, where the interactive animated image being displayed does not take up the entire display, the user can stop an interactive animated image by touching or otherwise selecting a location on the display that is outside of a region where the interactive animated image is being displayed. Other variations are also possible and within the scope of the embodiments disclosed herein.

In the example above, the predetermined way in which a user interacts with the user interface of the client device to cause the client device to transition from displaying frames of the first animated image file, to displaying frames of the second animated image file, was touching of a touchscreen of the client device. In a specific embodiment where the interactive animated image being displayed does not take up the entire display, the user needs to tap or touch a the portion of the display where the frames of the first animated image file are being displayed in order to cause the client device to transition to displaying frames of the second animated image file. Alternatively, or additionally, user interactions that can cause the client device to transition from displaying frames of the first animated image file, to displaying frames of the second animated image file, can include, but are not limited to, the user pressing a button on a mouse or other pointing device of the client device, or the user pressing of a predetermine key of a keyboard of the client device. Other variations are also possible, and within the scope of the embodiments described herein. The specific type(s) of user interaction(s) that will cause the client device to transition from displaying frames of the first animated image file, to displaying frames of the second animated image file, can be specified by the client interactive animated image application 110 that is installed on the client device 102.

The high level flow diagram of FIG. 5 will now be used to summarize certain methods for enabling a client device to display interactive animated images. The steps shown at the left in FIG. 5 are performed by a server system (e.g., 106). The steps shown at the right in FIG. 5 are performed by a client device (e.g., 102a). The step performed by the server system (which steps are shown at the left in FIG. 5) will first be described below, and then the steps performed by a client device (which steps are shown at the right in FIG. 5) will be described.

Referring to FIG. 5, step 502 involves installing the server interactive animated image application 116 on the server system 106.

Step 504 involves storing one or more tables that associate each unique identifier, of a plurality of unique identifiers, with respective first and second addresses that specify where respective first and second animated image files associated with the unique identifier are stored. Each of the first and second animated image files associated with one of the unique identifiers includes respective image data for a respective plurality of frames that when displayed sequentially provide for an illusion of motion. The table(s) stored at step 504 can be stored in a data store (e.g., the memory 306) of the server system 106, or any other data store that the server system 106 can access. Where an animated image file includes image data for a respective plurality of frames, the animated image file can more succinctly be said to include a plurality of frames.

At step 506 there is a determination of whether a query that includes a unique identifier (i.e., one of the unique identifiers included in the table(s) stored at step 504) is received from a client device. If the answer to the determination at step 506 is No, then step 506 is repeated. If the answer to the determination at step 506 is Yes, then flow goes to step 508.

Step 508 involves identifying respective first and second addresses that specify where respective first and second animated image files associated with the unique identifier (included in the query received from the client device) are stored. The identifying that occurs at step 508 is performed using at least one of the table(s) stored at step 504.

Step 510 involves sending the identified first and second addresses to the client device. The identified first address that is sent to the client device at step 510 enables the client device to download a first animated image file that includes image data for a first plurality of frames to be displayed sequentially, via a display of the client device. The identified second address that is sent to the client device at step 510 enables the client device to download a second animated image file that includes image data for a second plurality of frames to be displayed sequentially, via the display of the client device, in response to a user of the client device interacting with a user interface of the client device in a predetermined manner while the first plurality of frames corresponding to the first animated image file are being displayed sequentially via the display of the client device. In accordance with certain embodiments, both the first and second addresses that are sent from the server system 106 to a client device 102, are included within a same response. After step 510 is performed by the server system 106, flow can return to step 506.

Steps performed by a client device 102 (e.g., 102a), which are shown at the right side in FIG. 5, will now be described. Still referring to FIG. 5, step 512 involves installing the client interactive animated image application 110 on the client device 102. As explained above, the client interactive animated image application 110 can be downloaded to a client device 102 from an app store, or in response to a user of the client device 102 registering with the server 106 via a registration webpage, or the like. In accordance with certain embodiments, a user of one client device on which the client interactive animated image application 110 is installed can send, to a user of a second client device, an invitation for the user of the second client device to download the client interactive animated image application 110. Other variations are also possible and within the scope of the embodiments disclosed herein. For example, in accordance with an embodiment, when a user of a first client device (on which the client interactive animated image application 110 is installed) sends or otherwise shares a link (e.g., a URL) associated with an interactive animated image to a user of a second client device (on which the client interactive animated image application 110 is not installed), the user of the second client device can be presented with an option to download the client interactive animated image application 110. This would enable the user of the second client device to view and interact the interactive animated image (shared by the user of the first client device) using the client interactive animated image application 110. However, if the user of the second client device declines the option of downloading the client interactive animated image application 110, the user of the second client device can still view and interact the interactive animated image (shared by the user of the first client device) using a default browser (e.g., Google CHROME (TM), Apple SAFARI (TM), Mozilla FIREFOX (TM), Microsoft INTERNET EXPLORER (TM), etc.) of the second client device, as will be described in additional detail below.

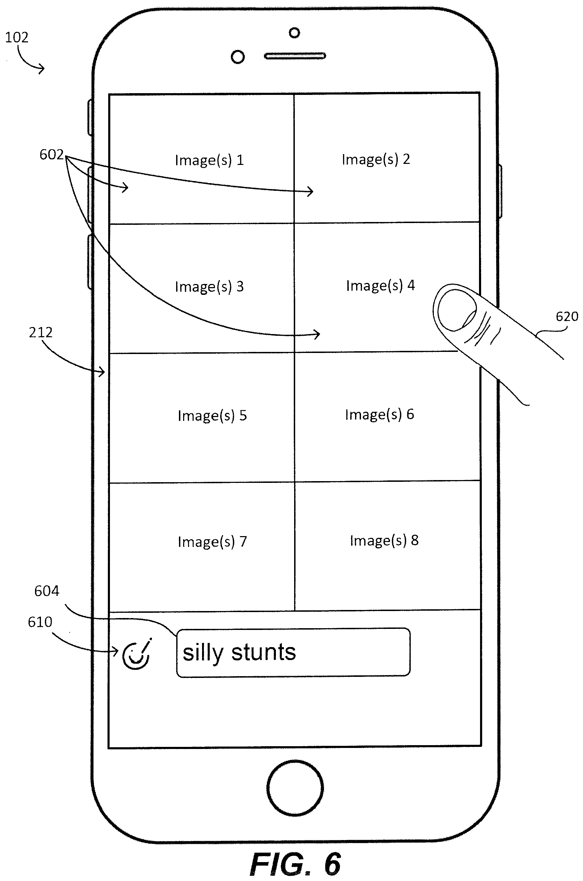

Step 513 involves the client device accepting a selection of an interactive animated image that a user of the client device wants to view and interact with. Additional details of step 513, according to certain embodiments of the present technology, are discussed further below. Step 514 involves the client device 102 sending, to the server system 106, a query that includes a unique identifier corresponding to the interactive animated image that the user of the client device selected. In accordance with certain embodiments, the query sent at step 514 can be generated and sent by the client device in response to a user of the client device selecting one of a plurality of names of interactive animated images from a list that the client interactive animated image application 110 caused to be displayed after being installed on the client device 102 and after being launched by a user of the client device 102. Such a list can be ordered in terms of popularity, or may be generated in response to a user entering one or more key words into a search field (e.g., 604 in FIG. 6) provided by the client interactive animated image application 110. The list can be a textual list. Alternatively, the list can include tiles or thumbnails of images, wherein each of the listed images can be static (e.g., can include just a single frame) or can be moving (e.g., can include two or more frames displayed in a sequence that loops). Such a list can be displayed in a single column, or in multiple columns. For example, where the list includes thumbnails or tiles of images, the thumbnails or tiles can be arranged in multiple rows and columns in a checkerboard or tiled pattern (e.g., as shown in FIG. 6). Such lists can be scrolled through by the user, e.g., by the user swiping downward on a touch screen, or the like. Other variations are also possible and within the scope of the embodiments of the present technology described herein. When the user selects a specific name or thumbnail of the interactive animated image that they want to view, the client device determines or identifies the unique identifier associated with the selection, and the client device includes that unique identifier in the query that the client device 102 sends to the server system 106 at step 514.

In certain embodiments, a user of a first client device (e.g., 102a) can suggest that a user of a second client device (e.g., 102b) view and interact with a certain interactive animated image, and steps 513 and 514 can occur in response to the user of the second client device (e.g., 102b) indicating that they want to view the suggested interactive animated image. For example, as will be described in additional details below, the user of the first client device (e.g., 102a) can use a messaging application (e.g., Messenger, WhatsApp Messenger, WeChat, Line, or Snapchat, just to name a few) to share an interactive animated image with the user of the second client device (e.g., 102b). A link to the specific interactive animated image that the first user wants to share with the second user can appear as a URL or other address in a message thread (e.g., in a message bubble) displayed on a display of the second user's client device (e.g., 102b). Step 513 can occur, followed by step 514, in response to the second user selecting (e.g., tapping on) the URL or other address. In an embodiment, preceding the URL or other address is a predetermined message that specifies that the first user wants to share an interactive image with the second user (e.g., the message can resemble "John Doe would like share this fun interactive image with you!"). In accordance with certain embodiments, if the second user already has the client interactive animated image application 110 installed on their client device 102 (e.g., 102b), then the client device will use the client interactive animated image application 110 to display the interactive image. This can include the client device of the second user launching the client interactive animated image application 110 installed thereon between steps 513 and 514, but is not limited thereto. However, if the second user does not have the client interactive animated image application 110 installed on their client device 102 (e.g., 102b), then the client device (e.g., 102b) can instead use its default browser (e.g., CHROME (TM), SAFARI (TM), FIREFOX (TM), INTERNET EXPLORER (TM), but not limited thereto) to view and interact with the interactive image shared by the first user. In other words, steps 513 and 514 can be performed by a client device (as can steps 516 through 526) that has not performed step 512. In certain embodiments, before a client device uses its default browser to view an interactive image shared by a user of another client device, the user of the client device can be provided with an option of installing the client interactive animated image application 110 on their client device. For example, when the user of the client device (that does not have the client interactive animated image application 110 installed thereon) selects the URL or other address for an interactive image from within a message thread, a pop-up, or the like, can ask the user of the client device whether they want to install the client interactive animated image application 110 on their client device. If the user agrees to install the client interactive animated image application 110 on their client device, then step 512 can occur between steps 513 and 514 (instead of prior to step 513, as shown in FIG. 5). If the user indicates that they do not want to install the client interactive animated image application 110 on their client device, then the default browser of the client device can be used to view and interact with the interactive image shared by another user. Either way, the client device 102 can send a query including a unique identifier for an interactive image to the server system 106 at an instance of step 514.

Step 516 involves the client device 102 receiving, from the server system 106, a response to the query that had been sent by the client device 102 to the server system at step 514. As shown in FIG. 5, and discussed above, the server system 106 sends its response to the query at step 510.

Step 518 involves the client device 102 using the first address (it received at step 516) to download a first animated image file that includes image data for a first plurality of frames to be displayed sequentially.

Step 520 involves the client device using the second address (it received at step 516) to download a second animated image file that includes image data for a second plurality of frames to be displayed sequentially.

Step 522 involves the client device sequentially displaying, via a display of the client device, at least two of the first plurality of frames after they are downloaded (at step 520) using the first address included in the response to the query (received at step 516). In accordance with certain embodiments, the downloading of the second animated image file at step 520 occurs in the background (i.e., as a background process) while the frames of the first animated image file (downloaded at step 518) are being displayed at step 522 via a display (e.g., 212) of the client device, in order to reduce latency associated with beginning to display the interactive animated image. Accordingly, the periods of time during which steps 520 and 522 are being performed can overlap with one another. It is also possible that step 522 begins before step 520. Alternatively, the displaying at step 522 can begin after the downloading has started at step 520, but before the downloading at step 520 has been completed. Other variations are also possible and within the scope of the embodiments described herein.

Still referring to FIG. 5, step 524 involves the client device determining whether a user of the client device interacted with a user interface (e.g., touch screen) of the client device in a predetermined manner (e.g., tapped the touch screen) while the first plurality of frames corresponding to the first animated image file are being displayed sequentially via the display of the client device. In accordance with certain embodiments, the frames of the first image that are sequentially displayed at step 522 will continue to be displayed in a loop until the client device detects that a user of the client device has interacted with a user interface of the client device in the predetermined manner. In other words, the frames of the first image can be sequentially displayed in a loop until the answer to the determination at step 524 is Yes. If the answer to the determination at step 524 is No, then flow returns to step 524. If the answer to the determination at step 524 is Yes, then flow goes to step 526.

Step 526 occurs in response to the client device detecting that a user of the client device interacted with a user interface of the client device in a predetermined manner while frames corresponding to the first animated image file were being displayed sequentially via the display of the client device. In other words, step 526 is performed when the answer to the determination at step 524 is Yes, as noted above. Step 526 involves the client device displaying, via the display of the client device, the second plurality of frames, which were downloaded at step 520 using the second address included in the response to the query received at step 516. In accordance with certain embodiments, after all of the frames of the second animated image file have been displayed in sequence, then flow returns to step 522. In an alternative embodiment, after all of the frames of the second animated image file have been displayed in sequence, the interactive animated image stops being displayed and a list of other interactive animated images that the user can select is optionally displayed. In embodiments where flow returns to step 522 after all of the frames of the second animated image file have been displayed in sequence, the user of the client device can stop viewing the interactive animated image by selecting a specific button, an X icon, or the like, depending upon implementation, or by touching or otherwise selecting a location on the display that is outside of a region where the interactive animated image is being displayed. Other options for enabling a user to stop viewing an interactive animated image are also possible and within the scope of the embodiments disclosed herein.

Still referring to FIG. 5, in accordance with certain embodiments, prior to a client device 102 sending a query to the server system 106 at step 514, the client device can first perform a local query using a unique identifier. More specifically, the client device can perform a local query to determine if the client device already has (stored locally within the memory of the client device) the first and second addresses associated with the unique identifier of the interactive animated image that the user of the client device has indicated they want to view at step 513. Further, before performing the downloading at steps 518 and 520, the client device can perform a local query to first determine if the client device already has the first and second animated image files associated with a unique identifier stored locally within the memory of the client device, e.g., within the interactive animated image files cache 228. If the client device already has the first and second animated image files, then steps 518 and 520 can be skipped and step 522, 524 and 526 can be performed.

FIG. 6 shows an exemplary client device 102, which is a smartphone that has a touch-sensitive display 212, wherein the client interactive animated image application 110 has been installed on the client device 102, and the application has been launched by the user of the client device 102. FIG. 6 illustrates how tiles 602 of images can be displayed in multiple columns and rows on the touch-sensitive display 212 of the client device 102, wherein each of the tiles 602 corresponds to a different interactive animated image, and thus, each of the tiles 602 corresponds to a different unique ID. Further, FIG. 6 illustrates how a user can select one of the tiles 602 by tapping on one of the tiles 602 with one of their fingers 620. As was explained above, in response to a selection by the user, the client device 102 can send a query including the unique identifier corresponding to the selected tile to the server system 106, in response to which the server system 106 will send a response to the client device 102. Alternatively, if the client device 102 already has the first and second addresses associated with the unique identifier corresponding to selected tile (and potentially already has the animated image files obtained from those address, e.g., in its interactive animated image files cache 228), then the client device 102 can retrieve such image data files from the addresses or the cache 228. As noted above, the image displayed in each tile 602 can be a static image, or can be an animated image displayed by looping through at least a few frames of the animated image. The image data that enables the client device 102 to display the tiles (or some other list) can be downloaded to the client device 102 when the client interactive animated image application 110 is launched and/or was initially downloaded to the client device. At least some of the image data, once downloaded to the client device 102, can be stored in a local data store (e.g., memory 206, or more specifically the cache 228) of the client device so that they are immediately available whenever the client interactive animated image application 110 is launched. Additionally image data can be downloaded to the client device 102 as a user of the client device 102 scrolls through the image tiles, or in response to a user of the client device 102 using a search field 604 to search for specific types of images using key words.

Still referring to FIG. 6, the create icon 610, when selected, causes another screen of the user interface to be shown, which enables the user to create one or more new custom interactive animated images. In one implementation, the user can have a first option of drawing custom images using drawing tools, a second option of capturing animated image files using a camera of the client device, and a third option of selecting animated image files that are made availably by the server system 106. It would also be possible for a user to upload animated image files, or the addresses therefore, to the server system 106. The user can specify which first and second animated image files are associated with one another, and the server system can assign a unique identifier to the first and second animated image files and can store the unique identifier and addresses (indicating where the associated first and second animated image files are stored) in one or more tables (e.g., in a table similar to Table 1 shown and discussed above). A user can also be allowed to add tag words to an interactive animated image file created by the user. Such tag words can be used by other users to search for and find and select the interactive animated image. Other variations are also possible, and within the scope of the embodiments described herein.

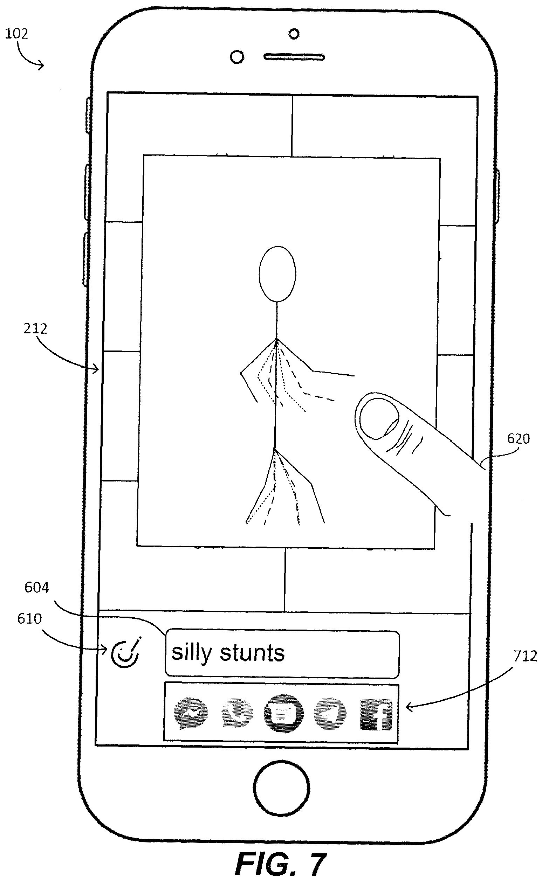

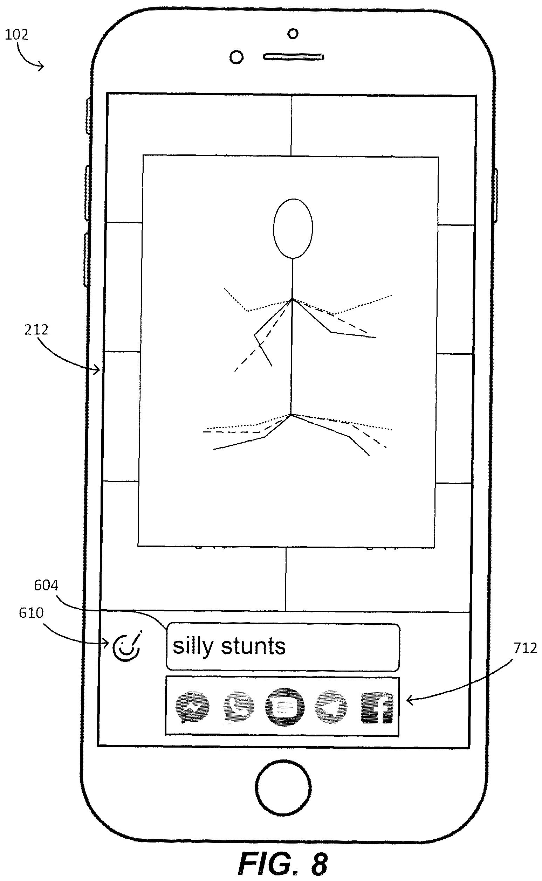

FIG. 7 shows an example of how a first plurality of frames, associated with a first animated image file of a selected interactive animated image, can be displayed sequentially in a region of the display 212 of the client device 102. FIG. 7 also shows a user tapping with their finger 620 on the region of the display 212 in which the first plurality of frames (associated with the first animated image file of the selected interactive animated image) are being displayed sequentially to provide for an illusion of motion. FIG. 8 shows an example of how the client device 102 can transition from displaying the frames associated with the first animated image file in a region of the display 212, to displaying frames associated with a second animated image file of the selected interactive animated image, in response to a user of the client device interacting with the client device 102 in a predetermined manner (e.g., tapping with their finger 620 a portion of the touch-sensitive screen of the client device 102 in which the frames of the first animated image file of the interactive animated image were being displayed). In FIGS. 7 and 8 different frames of an animated image file are shown in different types of lines (i.e., solid, dashed and dotted lines) overlaid on top of one another to represent the different frames being displayed sequentially.

Still referring to FIGS. 7 and 8, also shown therein are a few share buttons 712 that enable a user of the client device (e.g., 102a) to share an interactive animated image with another user of another client device (e.g., 102b) using a messaging application, some other type of social media application, or an email application. In accordance with certain embodiments, the share buttons 712 appear once the user of the client device selects a specific interactive animated image for viewing, which is why the share buttons were not shown in FIG. 6. Five exemplary share buttons 712 are shown in FIGS. 7 and 8, including, from left to right, a Facebook Messenger share button, a WhatsApp Messenger share button, an Android Messenger share button, a Telegram Messenger share button, and a Facebook share button. Additional messaging or social media applications that can be used to share interactive animated images include, but are not limited to, Google Hangouts, WeChat, and Shapchat. Share buttons can also be used to share interactive animated images via an email service, such as, but not limited to, Google Gmail, Microsoft Outlook, Apple iCloud Mail, and Yahoo! Mail, just to name a few. If there are more share options than there are share buttons that can be displayed at once on a display of the client device, then a "..." icon (i.e., a dot, dot, dot icon, or more options icon) can be used to enable the user to see more share options.

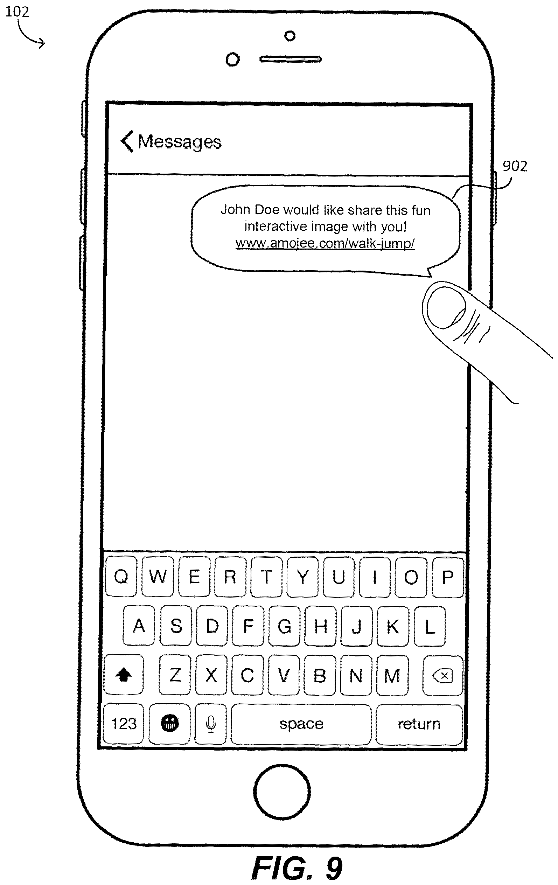

In response to a first user of a first client device (e.g., 102a) selecting one of the share buttons 712, while the user is viewing a selected interactive animated image on their client device (e.g., 102a), the user will be able to select (from their list of contacts associated with the messaging application, social media application or email application) another user of another client device (e.g., 102b) to share the selected interactive animated image with using the selected messaging application or other type of social media or email application. A message thread, or the like, with the selected other user can then be displayed using the selected application (selected by selecting one of the share buttons 712) and a unique link acting as a unique identifier for a selected interactive animated image can be sent to the other user using the messaging application (or other type of social media or email application selected by selecting one of the share buttons 712). An example of such a unique link is shown within a message bubble 902 in FIG. 9. Thereafter, when the other user (e.g., the user of the client device 102b) selects or otherwise activates the unique link they received from the first user, the client device (e.g., 102b) of the second user can then perform steps 514 through 526 shown in and described with reference to FIG. 5. If the client device (e.g., 102b) of the other user already has the client interactive animated image application 110 installed, then the client interactive animated image application 110 will automatically be launched when the other user selects or otherwise activates the link and the interactive animated image will be displayed using the client interactive animated image application 110. If the client device (e.g., 102b) of the other user does not already have the client interactive animated image application 110 installed, then a default browser of their client device (e.g. 102b) can be used to display the shared interactive animated image. As noted above, the other user can also be provided with the option of installing the client interactive animated image application 110 on their client device.

FIG. 9 illustrates how a link to a specific interactive animated image that a first user wants to share with a second user can appear as a URL or other address in a message thread (e.g., in a message bubble 902) displayed on a display of the second user's client device (e.g., 102b). A similar message bubble, or the like, can appear on the display of the client device of the first user within a message thread, before and/or after the first user sends the URL or other unique link (that acts as a unique identifier) to the second user. This way the first user can see what they are sending (and/or have sent) to the second user. Such a unique link can instead by displayed within an email, a message board, or the like, depending upon how a user chose to share the interactive animated image with one or more other users.

In the above described embodiments, each unique identifier, of a plurality of unique identifiers, were described as being associated with respective first and second addresses that specify where respective first and second animated image files associated with the unique identifier are stored. Further, each of the first and second animated image files associated with one of the unique identifiers was described as including respective image data for a respective plurality of frames that when displayed sequentially provide for an illusion of motion. Further, in the above described embodiments, a server system, after receiving a query including one of the unique identifiers from a client device, identifies respective first and second addresses (that specify where respective first and second animated image files associated with the unique identifier included in the query are stored) and sends to the client device a response including the identified first and second addresses, thereby enabling the client device to download the first and second animated image files associated with the unique identifier. It is also within the scope of the embodiments described herein, that at least some unique identifiers are associated with more than two addresses. For example, a unique identifier can be associated with respective first, second and third (and potentially more) animated image files that are stored at respective first, second and third (and potentially more) addresses. In such an embodiment, when a server system receives a query including a unique identifier associated with three (or more) animated image files, the response to the query can include three (or more) addresses that specify where the three (or more) animated image files are stored. After receiving the response to the query, the client device can download the three (or more) animated image files using the three (or more) addresses included in the response to the query. The client device can sequentially display a first plurality of frames corresponding to the first animated image file. Then, in response to a user of the client device interacting with a user interface of the client device in a predetermined manner (while the first plurality of frames corresponding to the first animated image file are being displayed sequentially via the display of the client device), the client device can transition to sequentially displaying a second plurality of frames corresponding to the second animated image file. Thereafter, in response to the user of the client device interacting with the user interface of the client device in the predetermined manner (while the second plurality of frames corresponding to the second animated image file are being displayed sequentially via the display of the client device), the client device can transition to sequentially displaying a third plurality of frames corresponding to the third animated image file. Other variations are also possible and within the scope of the embodiments described herein.

As explained above, certain embodiments of the present technology enhance or improve the displaying of animated GIFs and other format types of animated image files by making them interactive. Such embodiments provide for an improved user experience and enhance the conventional capabilities of animated image files, such as, but not limited to, animated GIFs.

In the above described embodiments, each unique identifier, of a plurality of unique identifiers, were described as being associated with respective first and second addresses that specify where respective first and second animated image files associated with the unique identifier are stored. Accordingly, in the above described embodiments, the image files (e.g., GIF files) associated within an interactive image (e.g., an interactive GIF) were described as being animated image files (e.g., animated GIF files). In accordance with alternative embodiments, one or both the image files associated with an interactive image can be a static image (e.g., a static GIF) rather than an animated image. In such alternative embodiments, each unique identifier, of a plurality of unique identifiers, is still associated with respective first and second addresses that specify where respective first and second image files associated with the unique identifier are stored. However, one or both such image files can be a static image file, instead of an animated image file. For example, the first image file (which can be downloaded by a client using the first address) can be an animated image file and the second image file (which can be downloaded by a client using the second address) can be a static image file. For another example, the first image file (which can be downloaded by a client using the first address) can be a static image file and the second image file (which can be downloaded by a client using the second address) can be an animated image file. For still another example, the first image file (which can be downloaded by a client using the first address) can be a static image file and the second image file (which can be downloaded by a client using the second address) can also be a static image file.

Each static image file includes image data for a single image, i.e., for a single frame. Where the first image file of an interactive image includes image data for a single image, the single image (downloaded to the client device using a first address associated with a unique identifier for the interactive image) can be displayed continually on a client device until a user of the client device interacts with a user interface of the client device in a predetermined manner (while the single static image is being displayed via a display of the client device). Then, in response to detecting a user of the client device interacting with the user interface of the client device in the predetermined manner (while the single static image was being displayed via the display of the client device), the client device will transition to displaying the second image file (downloaded to the client device using a second address associated with the unique identifier for the interactive image). Where the second image file is an animated image file, frames of the second image file can be displayed sequentially via the display of the client device, and then the client device can return to displaying the static image of the first image file. Where the second image file is a static image file, the static image can be displayed via the display of the client device for a specified length of time (e.g., 2 seconds, but not limited thereto), before the client device returns to displaying the static image (or alternatively, the animated image) of the first image file. The length of time that the static image of the second image file is displayed (2 seconds in the above example) can be specified by the second image file, or can alternative be specified by the interactive image application 110 installed on the client. Accordingly, the client interactive animated image application 110 can also be referred to more generally as a client interactive image application, because it is also capable of supporting interactive images that are not animated. Similarly, the server interactive animated image application 116 can also be referred to more generally as a server interactive image application, because it is also capable of supporting interactive images that are not animated.

The subject matter described herein may be embodied in systems, apparatus, methods, and/or articles depending on the desired configuration. In particular, various implementations of the subject matter described herein may be realized in computer software, firmware or hardware and/or combinations thereof, as well as in digital electronic circuitry, integrated circuitry, and the like. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, applications, components, or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs), but not limited thereto) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, certain the subject matter described herein may be implemented on a computer having a display device (e.g., a touch-sensitive display, a non-touch sensitive display monitor, but not limited thereto) for displaying information to the user and a keyboard, touch screen and/or a pointing device (e.g., a mouse, touchpad or a trackball, but not limited thereto) by which the user may provide input to the computer. Other kinds of devices may be used to provide for interaction with a user, administrator and/or manager as well; for example, feedback provided to the user, administrator and/or manager may be any form of sensory feedback (e.g., visual feedback, auditory feedback, or tactile feedback); and input from the user may be received in any form, including acoustic, speech, or tactile input, depending upon implementation.

The subject matter described herein may be implemented in a computing system that includes a back-end component (e.g., as a data server), or that includes a middleware component (e.g., an application server), or that includes a front-end component (e.g., a client computer having a graphical user interface (GUI) or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include, but are not limited to, a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

The implementations set forth in the foregoing description do not represent all implementations consistent with the subject matter described herein. Instead, they are merely some examples consistent with aspects related to the described subject matter. Wherever possible, the same reference numbers will be used throughout the drawings to refer to the same or like parts.

While various embodiments of the present invention have been described above, it should be understood that they have been presented by way of example, and not limitation. It will be apparent to persons skilled in the relevant art that various changes in form and detail can be made therein without departing from the spirit and scope of the invention. For example, although a few variations have been described in detail above, other modifications or additions are possible. In particular, further features and/or variations may be provided in addition to those set forth herein. For example, the implementations described above may be directed to various combinations and sub-combinations of the disclosed features and/or combinations and sub-combinations of several further features disclosed above. In addition, the logic flow depicted in the accompanying figures and/or described herein do not require the particular order shown, or sequential order, to achieve desirable results. Other embodiments may be within the scope of the following claims.

Embodiments of the present invention have been described above with the aid of functional building blocks illustrating the performance of specified functions and relationships thereof. The boundaries of these functional building blocks have often been defined herein for the convenience of the description. Alternate boundaries can be defined so long as the specified functions and relationships thereof are appropriately performed. Any such alternate boundaries are thus within the scope and spirit of the claimed invention. One skilled in the art will recognize that these functional building blocks can be implemented by discrete components, application specific integrated circuits, processors executing appropriate software and the like or any combination thereof.

The breadth and scope of the present invention should not be limited by any of the above-described exemplary embodiments, but should be defined only in accordance with the following claims and their equivalents.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for enabling a client device to display interactive animated images, the method comprising:
(a) a client device sending a query that includes a unique identifier to a server system;
(b) the client device receiving, from the server system, a response to the query,
wherein the response to the query includes first and second addresses that specify where respective first and second animated image files associated with the unique identifier included in the query are stored, and
wherein each of the first and second animated image files associated with the unique identifier includes respective image data for a respective plurality of frames that when displayed sequentially provide for an illusion of motion;
(c) the client device downloading the first animated image file, using the first address, wherein the first animated image file includes image data for a first plurality of frames to be displayed sequentially;
(d) the client device displaying sequentially, via a display of the client device, at least two of the first plurality of frames after they are downloaded using the first address included in the response to the query;
(e) the client device downloading the second animated image file, using the second address, wherein the second animated image file includes image data for a second plurality of frames to be displayed sequentially;
(f) the client device detecting a user of the client device interacting with a user interface of the client device in a predetermined manner while any of the at least two of the first plurality of frames corresponding to the first animated image file is being displayed as part of the sequential displaying thereof via the display of the client device; and
(g) in response to detecting a user of the client device interacting with the user interface of the client device in the predetermined manner while any of the at least two of the first plurality of frames corresponding to the first animated image file is being displayed as part of the sequential displaying thereof via the display of the client device, the client device displaying, via the display of the client device, the second plurality of frames that are downloaded using the second address included in the response to the query.

2. The method of claim 1, wherein:
the server system stores in a data store one or more tables that associate each unique identifier, of a plurality of unique identifiers, with respective first and second addresses that specify where respective first and second animated image files associated with the unique identifier are stored, wherein each of the first and second animated image files associated with one of the unique identifiers includes respective image data for a respective plurality of frames that when displayed sequentially provide for an illusion of motion.

3. The method of any one of claims 1 or 2, wherein:
the first address that is included in the response to the query comprises a first uniform resource locator (URL); and
the second address that is included in the response to the query comprises a second URL.

4. The method of any one of claims 1 through 3, wherein:
the first URL specifies where the first animated image file is stored remotely from the data store in which the one or more tables are stored; and
the second URL specifies where the second animated image file is stored remotely from the data store in which the one or more tables are stored.

5. The method of any one of claims 1 or 2, wherein:
the first address that is included in the response to the query specifies where the first animated image file is stored locally within the data store in which the one or more tables are stored; and
the second address that is included in the response to the query specifies where the second animated image file is stored locally within the data store in which the one or more tables are stored.

6. The method of any one of claims 1 or 2, wherein:
one of the first and second addresses that is included in the response to the query comprise a uniform resource locator (URL) that specifies where one of the first and second animated image files is stored remotely from the data store in which the one or more tables are stored; and
the other one of the first and second addresses that is included in the response to the query comprise an address that specifies where the other one of the first and second animated image files is stored locally within the data store in which the one or more tables are stored.

7. The method of any one of claims 1 through 6, wherein the first plurality of frames, corresponding to the first animated image file, will continue to be displayed sequentially in a loop until a user of the client device interacts with the user interface of the client device in the predetermined manner while the first animated image is being displayed via the display of the client device.

8. The method of any one of claims 1 through 7, wherein the predetermined manner that a user of the client device interacts with client device, while any of the at least two of the first plurality of frames corresponding to the first animated image file is being displayed as part of the sequential displaying thereof, and in response to which the second plurality of frames corresponding to the second animated image file will be displayed sequentially, is selected from the group consisting of:
touching of a touchscreen of the client device;
moving of a mouse or other pointing device of the client device;
pressing a button on a mouse or other pointing device of the client device; or
pressing of a predetermine key of a keyboard of the client device.

9. The method of any one of claims 1 through 8, wherein a file format of the animated image files is selected from the group consisting of:
animated Graphics Interchange Format (GIF);
Animated Portable Network Graphics (APNG);
Multiple-image Network Graphics (MNG);
WebP; or
FLIC.

10. The method of any one of claims 1 through 9, wherein the client device downloading the second animated image file using the second address at step (e) is performed as a background process while the client device displays at least two of the first plurality of frames sequentially via the display of the client device at step (d).

11. One or more processor readable storage devices having instructions encoded thereon which when executed cause one or more processors of a client device to perform the method of any one of claims 1 through 10 to enable the client device to display an interactive animated image.

12. A method of operating a server system for enabling a client device to display interactive animated images, the method comprising:
(a) storing one or more tables that associate each unique identifier, of a plurality of unique identifiers, with respective first and second addresses that specify where respective first and second animated image files associated with the unique identifier are stored, wherein each of the first and second animated image files associated with one of the unique identifiers includes respective image data for a respective plurality of frames that when displayed sequentially provide for an illusion of motion;
(b) receiving, from a client device, a query including one of the unique identifiers;
(c) identifying respective first and second addresses that specify where respective first and second animated image files associated with the unique identifier included in the query are stored, the identifying performed using at least one of the one or more tables, and the identifying performed in response to receiving the query including one of the unique identifiers from the client device; and
(d) sending the identified first and second addresses to the client device;
wherein the identified first address that is sent to the client device enables the client device to download a first animated image file that includes image data for a first plurality of frames to be displayed sequentially, via a display of the client device; and
wherein the identified second address that is sent to the client device enables the client device to download a second animated image file that includes image data for a second plurality of frames to be displayed sequentially, via the display of the client device, in response to a user of the client device interacting with a user interface of the client device in a predetermined manner while any of the first plurality of frames corresponding to the first animated image file is being displayed as part of the sequential displaying thereof via the display of the client device.

13. The method of claim 12, wherein:
the first plurality of frames, corresponding to the first animated image file, will continue to be displayed sequentially in a loop until a user of the client device interacts with a user interface of the client device in the predetermined manner while the first animated image is being displayed via the display of the client device; and
the predetermined manner that a user of the client device interacts with client device, while the first plurality of frames corresponding to the first animated image file are displayed sequentially, and in response to which the second plurality of frames corresponding to the second animated image file will be displayed sequentially, is selected from the group consisting of:
touching of a touchscreen of the client device;
moving of a mouse or other pointing device of the client device;
pressing a button on a mouse or other pointing device of the client device; or
pressing of a predetermine key of a keyboard of the client device.

14. The method of any one of claims 12 or 13, wherein a file format of the animated image files is selected from the group consisting of:
animated Graphics Interchange Format (GIF);
Animated Portable Network Graphics (APNG);
Multiple-image Network Graphics (MNG);
WebP; or
FLIC.

15. A server system, comprising:
one or more data stores configured to store one or more tables that associate each unique identifier, of a plurality of unique identifiers, with respective first and second addresses that specify where respective first and second animated image files associated with the unique identifier are stored, wherein each of the first and second animated image files associated with one of the unique identifiers includes respective image data for a respective plurality of frames that when displayed sequentially provide for an illusion of motion; and
one or more processors configured to
receive, from a client device, a query including one of the unique identifiers;
identify respective first and second addresses that specify where respective first and second animated image files associated with the unique identifier included in the query are stored, the identifying performed using at least one of the one or more tables, and the identifying performed in response to receiving the query including one of the unique identifiers from the client device; and
send the identified first and second addresses to the client device;
wherein the identified first address that is sent to the client device enables the client device to download a first animated image file that includes image data for a first plurality of frames to be displayed sequentially, via a display of the client device; and
wherein the identified second address that is sent to the client device enables the client device to download a second animated image file that includes image data for a second plurality of frames to be displayed sequentially, via the display of the client device, in response to a user of the client device interacting with a user interface of the client device in a predetermined manner while any of the first plurality of frames corresponding to the first animated image file are being displayed as part of the sequential displaying thereof via the display of the client device.
